# EUROPEAN PATENT APPLICATION

(11) **EP 3 370 081 A1**
(43) Date of publication of application: **05.09.2018**
(21) Application number: 17159224.9
(22) Date of filing: 03.03.2017
(51) Int. Cl.: G01S 7/523

(54) **A DIGITAL TRANSCEIVER**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Disclosed is a transceiver for use in a SONAR system, wherein the transceiver comprises a transmitter portion and a receiver portion, the transceiver comprising a common digital signal processing, DSP, platform, operable to perform signal processing for both transmit and receive operations.

## Description

The present invention relates to a transceiver for use, particularly, in a torpedo. However, embodiments of the present invention may find other uses in other systems. Any references to torpedoes should therefore be considered as exemplary only and not limiting.

A torpedo is a powered projectile typically fired from one vessel (either a surface vessel, an airborne vessel or an underwater vessel) intended to strike and damage or destroy an enemy vessel. There are a variety of different torpedo types, all of which operate in a challenging environment, posing many difficult design problems.

In a particular scenario, a torpedo may be provided with a wire-guide system which is operable to guide the torpedo to the general vicinity of the target and then conduct a covert passive search for an enemy vessel. Once at close range to the enemy vessel, the torpedo is able to accelerate to sprint speed and make use of an active sonar system to classify and home in on its target.

Embodiments of the present invention relate to the active sonar system particularly and provide many advantages over prior art sonar systems.

In prior art torpedo systems, much of the processing of transmit and receive waveforms is performed in the analog domain. As digital systems have become more prevalent, this approach is changing and digital processing is becoming more widely used.

It is an aim of embodiments of the present invention to utilise digital technology where possible in torpedo systems, to provide greater consistency and flexibility in use.

According to the present invention there is provided an apparatus and method as set forth in the appended claims. Other features of the invention will be apparent from the dependent claims, and the description which follows.

Although a few preferred embodiments of the present invention have been shown and described, it will be appreciated by those skilled in the art that various changes and modifications might be made without departing from the scope of the invention, as defined in the appended claims.

For a better understanding of the invention, and to show how embodiments of the same may be carried into effect, reference will now be made, by way of example only, to the accompanying diagrammatic drawings in which:
Figure 1 shows a schematic for a common DSP platform according to an embodiment of the invention.
Figure 2 shows a timing diagram, illustrating the separation of transmit and receive periods in the operation of the SONAR transceiver

As mentioned, prior art transceivers tend to require separate and distinct transmit and receive chains, whereby the analog processing performed on the respective transmitted and received signals is entirely different. As such, there is no opportunity for commonality and the transmit and receive circuits are separate and each is customised for its particular use.

In embodiments of the present invention, digital signal processing is employed in both the transmit and receive chains. This affords a greater degree of flexibility and configurability to the entire transceiver.

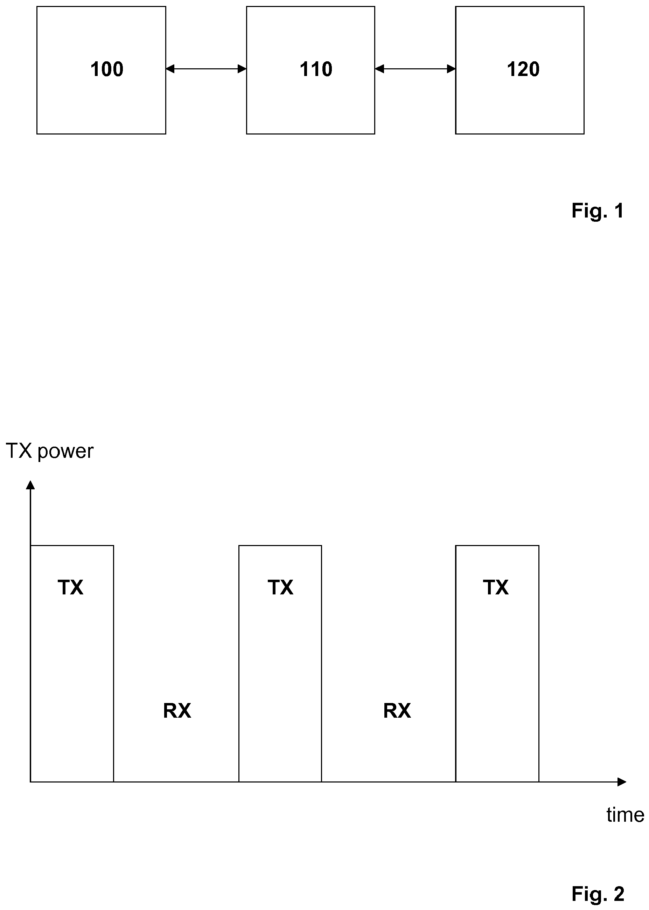

Figure 1 shows how a common DSP platform which couples to dedicated hardware for each of the receive and transmit chains and then on to the output transducer from which the SONAR signals are transmitted and received.

Figure 1 includes the common DSP platform 100, operable to perform signal processing on the transmit and receive signals. It also includes the analogue transmit/receive circuitry 110. This includes the analogue to digital and digital to analogue units for use in the receive and transmit chains respectively. It further includes a transducer 120. The transducer 120 is operable to transmit SONAR signals when in TX mode and to receive echoes of transmitted signals when in RX mode.

In a SONAR transceiver for a torpedo, it is not practical to transmit and receive at the same time. In practice, the high power transmission would overwhelm or possibly damage the sensitive receiver and so the transmit and receive periods are clearly delineated.

This is illustrated in Figure 2 which shows transmit activity over time. Periodic bursts of transmitted energy (TX) are interrupted by periods when no energy is transmitted. In these periods of no transmitted energy, the transceiver is operable in receive mode (RX) and the receiver seeks to listen out for returns from a target object, whereby the returns are reflections of the transmitted energy. The transmitted bursts may be configured in various ways to enable certain types of target to be more effectively detected. The exact methods used are beyond the scope of this application and do not pay a part in the workings of embodiments of this invention.

The primarily software-based design of embodiments of the invention means that the transmit signals are created by up-sampling, scaling and modulating in the digital domain, with the signals passing into the analog domain as late as practically possible before transmission.

The same methodology applies in reverse, whereby the received signals are sampled and converted into the digital domain as soon as possible in the receive chain after reception.

As such, embodiments of the present invention are able to capitalise on this feature to utilise a common DSP platform, which operates during transmit periods to process signals for transmission and during receive periods to process signals which have been received.

Since the DSP platform is configured to operate according to software, it is able to quickly alter its operation according to code included in that software and so changing functionality between receive and transmit functions is possible since the software required to perform each function is included in the DSP platform at all operative times and only the relevant routines are called as needed.

In the prior art, no such commonality is possible, since dedicated hardware was typically required which could not be reconfigured to be used in this way.

Suitable common DSP platforms include any DSP system operable according to the particular requirements of the system in which it is to be included. In the present embodiment, it is found that the SHARC DSP system supplied by Analog Devices is suitable, although embodiments of the invention are not limited to this system. In particular, the ADSP-21469 is found to be advantageous. This processor combines general purpose DSP attributes (e.g. dual data handling, bit-reversed addressing) and also includes with hardware accelerators for FFTs, FIR and IIR digital filtering and multi-channel PWM, which is used in the transmitter.

In a practical SONAR system, multiple transmit and receive channels are used. It is found that embodiments of the present invention are able to support 4 separate channels in one common DSP platform. Depending on the exact nature of the system, more or fewer parallel channels may be supported as needed.

By supporting multiple channels in this way, a truly modular system can be created, whereby channel groupings can be added as needed to achieve a desired effect, such as accuracy or flexibility.

Embodiments of the present invention therefore offer advantages in terms of flexibility, allowing common hardware resources to be utilised for both transmit and receive functions.

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A transceiver for use in a SONAR system, wherein the transceiver comprises a transmitter portion and a receiver portion, the transceiver comprising a common digital signal processing, DSP, platform, operable to perform signal processing for both transmit and receive operations.

2. The transceiver of claim 1 wherein the common DSP platform is operable to perform signal processing for both transmit and receive operations for a plurality of channels.

3. The transceiver of any preceding claim wherein the common DSP platform is operable to perform further signal processing operations for a plurality of channels.

4. A SONAR system comprising a transceiver according to any preceding claim.

5. The SONAR system of claim 4 comprising a plurality of transceivers.

6. A Torpedo comprising a SONAR system according to claim 4 or claim 5.

7. A method of performing signal processing in a SONAR system comprising a transceiver having a transmit portion and receive portion, wherein a common digital signal processing platform is provided, operable to perform signal processing for both transmit and receive operations.
